# EUROPEAN PATENT APPLICATION

(11) **EP 4 545 402 A1**
(43) Date of publication of application: **30.04.2025**
(21) Application number: 23206007.9
(22) Date of filing: 26.10.2023
(51) Int. Cl.: B63H 21/17, B60L 50/60, B63H 21/20, B63H 23/24

(54) **MARINE PROPULSION DEVICE AND MARINE VESSEL**

(71) Applicant: ZF Friedrichshafen AG, 88046 Friedrichshafen (DE); ZF PADOVA S.r.l, 35030 Caselle di Selvazzano (PD) (IT)
(72) Inventor: Caracristi, Mattia, 35030 Caselle di Selvazzano (PD) (IT); Zottele, Michele, 38123 Trento (IT)
(74) Representative: ZF Friedrichshafen AG

(57) **Abstract**

The present invention relates to a marine propulsion device (1) comprising a first electric machine (10) and a second electric machine (20). Both electric machines (10, 20) are coupled to a drive shaft (2) for driving a propeller (43). The first electric machine (10) and the second electric machine (20) are operated on different voltages.

The invention further relates to a marine vessel (100) comprising such a marine propulsion device (1).

## Description

The present invention relates to a marine propulsion device with two electric machines and to a marine vessel with such a propulsion device.

In recent years there is an increasing demand for marine drive units with electric drive machines for environmental and efficiency reasons. For these reasons several marine drive units have been proposed in form of hybrid systems and all-electric systems.

In the EP 1 233 904 A1 a propulsion device for a ship has been disclosed, wherein the propulsion device has a propeller, which can be driven in two operating ranges by two electric motors via one drive shaft. There is a first operating range for propeller rotational speeds up to 30% of the rated rotational speed and a second operating range for the propeller rotational speeds extending beyond this speed up to the rated rotational speed. A first electric motor with static converter supply is provided as first drive motor and a second electric motor is arranged on the drive shaft as a second drive motor. The two electric motors differ in their rated power.

The purpose of the present invention is to provide an improved marine propulsion device, which efficiently can be used in a wide range of applications.

These purposes are achieved by a marine propulsion device according to claim 1 and by a marine vessel according to claim 9. Further embodiments are claimed in dependent claims.

The present invention provides a marine propulsion device comprising a first electric machine and a second electric machine, wherein both electric machines are coupled to a drive shaft for driving a propeller. This means, that both electric machines are coupled to the same shaft, namely the drive shaft. The drive shaft either being a propeller shaft or being coupled to a propeller shaft through further transmission elements. The first electric machine and the second electric machine are operated on different voltages. In one embodiment of the invention the first electric machine is driven in a high voltage range and the second electric machine is driven in a low voltage range. The high voltage range may be between 360 and 400 Volt and the low voltage range may have nominal voltage of 48 Volt, as an example. As an example, the electric machines can be AC or DC motors, each having a controller that controls speed and torque of the corresponding motor. An appropriate electric supply system may comprise a high-voltage battery and/or a low voltage battery.

Each electric machine can be driven in its corresponding voltage range at a constant voltage level. However, the different voltages and corresponding differing power ranges of the two electric machines allow for a modular electric supply in different operating modes for high efficiency, as further explained below. A general benefit of a high voltage machine is, that for high load requirements, relatively low electric currents are required. Thus, thinner cables can be used regarding the conductor cross-section. This saves material, weight, cooling capacity and costs. With other words it is easier to provide high power supply on a higher voltage level for high power demands because the required currents are not as high.

A further benefit can be gained if a service battery, which is commonly installed in a vessel for service appliances, will also be used by the marine propulsion device. Alternatively, a low voltage service battery can be additionally connected to the second electric machine to achieve a high level of reliability. If, as an example, a low voltage battery of the propulsion device and the low voltage service battery are both operated at the same voltage, e.g. 48 Volt, the service battery can easily be connected to the marine propulsion device to supply electric energy to the corresponding electric machine of the marine propulsion system. This way a redundant system can be achieved to operate the marine propulsion device in an operating mode, where the second electric machine is used for propulsion, while the electric energy is supplied to the second electric machine from the service battery.

In one embodiment the first electric machine comprises a first rotor and the second electric machine comprises a second rotor. The drive shaft is permanently connected to the first rotor and to the second rotor. The first and the second rotor can be rigidly connected to the drive shaft. Alternatively at least one of said rotors can be an integral part of the drive shaft.

The drive shaft of the marine propulsion device may have different designs in different embodiments of the invention. The drive shaft can be a one-piece shaft in one embodiment, whereas in another embodiment the drive shaft can be a multi-piece shaft comprising at least two shaft elements fixed together by a spline connection or a flange connection. Each electric machine can have its own housing or both electric machines can be disposed in a single, multi-piece housing. Such a layout is beneficial in view of a compact layout of the device. In one embodiment both electric machines are arranged coaxially and adjacent to each other. The front side of the first electric machine can be in contact with the back side of the second electric machine. The housings of the two electric machines can be rigidly connected to each other.

Even so the rotors of the first and second electric machines are both coupled to the same shaft, namely the drive shaft, each electric machine can be controlled independent from the other electric machine to allow independent operation of the two electric machines without the need of any clutch.

Each of the two electric machines may have its dedicated power electronic means like inverters and/or controllers. Therefore the marine propulsion device in one embodiment comprises a control system, which is arranged to independently control the operation of the first electric machine and the second electric machine.

The control system can be arranged to control operation of the marine propulsion device in three operation modes, a first operating mode using only the first electric machine for propulsion, a second operating mode using only the second electric machine for propulsion and a third operating mode using the first and the second operating machines for propulsion. The different operating modes allow for high efficiency in different rotational speed ranges of the propeller. Beneficially the first electric machine may have a power range of 30 to 110 Kilowatt and the second electric machine may have a power range of about 30 to 60 Kilowatt. The control system shall be arranged to select the appropriate operation modes depending on the current power demand, which again depends on the required rotational speed of the propeller. Hence, each of the two electric machines can be related to specific speed ranges of the propeller or a propeller shaft.

The proposed marine propulsion device can generally be applied in different marine propulsion systems, like outboard or inboard systems, stern drives, Z-drives or pod drives. One embodiment for a pod drive comprises an upper and a lower bevel gear set to transmit propulsion power from the drive shaft to a propeller shaft supported in a pod which is arranged underneath a hull of a marine vessel. The marine propulsion device may comprise further transmission elements to adapt the rotational speed and the torque to the required demands in specific applications.

The invention relates further to a marine vessel with a marine propulsion device as described above.

The invention and its benefits will be further and more particularly described in the following, by way of example only, and with reference to the accompanying figure.
- Fig. 1: shows a marine propulsion device according to the invention in a schematic drawing and
- Fig. 2: shows a layout of a marine propulsion device according to the invention.

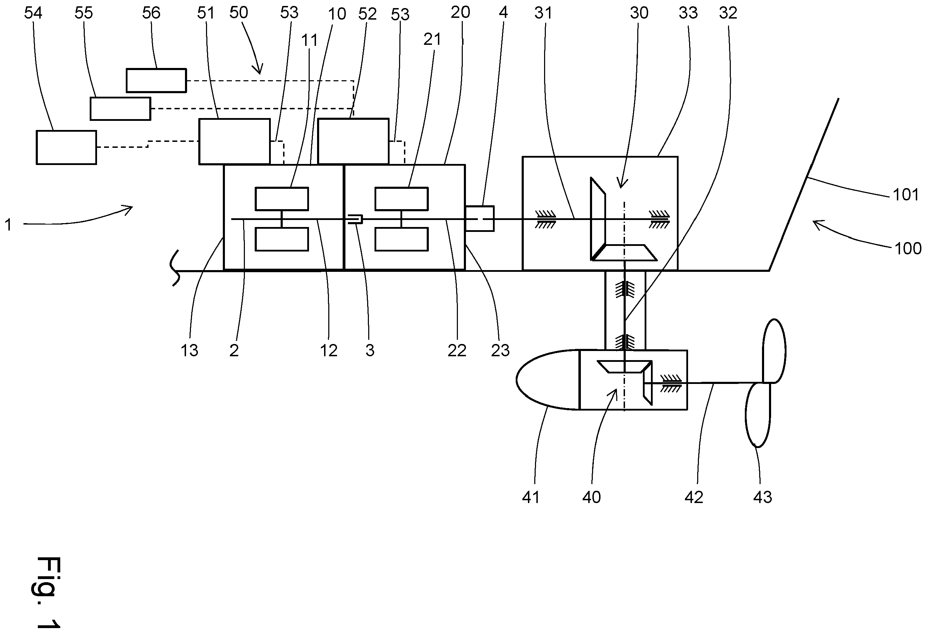

The embodiment of Fig. 1 shows a marine propulsion device 1 which is mounted in a hull 101 of a marine vessel 100. In this example the marine propulsion device 1 is a pod drive comprising a pod 41, which is arranged underneath the hull 101. The pod drive comprises an upper bevel gear set 30 and a lower bevel gear set 40 to transmit propulsion power from the drive shaft 2 via a vertical shaft 32 to a propeller shaft 42 which is supported in the pod 41. A propeller 43 is mounted on the trailing end of the propeller shaft 42 to provide for the required propulsion. The upper bevel gear set 30 is enclosed in a gearbox housing 33, which is mounted to the bottom of the hull 101. An input shaft 31 of the upper bevel gear set 30 is connected to the drive shaft 2 via a torsional damper 4.

The marine propulsion device 1 comprises a first electric machine 10 and a second electric machine 20 for driving a propeller 43. Both electric machines 10, 20 are coupled to a drive shaft 2 for driving the same. The first electric machine 10 comprises a first rotor 11 and the second electric machine 20 comprises a second rotor 21. Both rotors 11 and 21 are permanently connected to the drive shaft 2. The drive shaft 2 is a multi-piece shaft comprising a first shaft section 12 and a second shaft section 22 which are coupled together for co-rotation. This means, that the first shaft section 12 and the second shaft section 22 are connected to each other in a rotationally fixed manner. In this case the first and the second shaft sections 12 and 22 are coupled to each other by a splined connection 3. The first rotor 11 is coupled to the first shaft section 12 and the second rotor 21 is coupled to the second shaft section 22.

Each of the two electric machines 10 and 20 has its own housing. Hence, there is a first housing 13 of the first electric machine 10 and a second housing 23 for the second electric machine. Both housings 13 and 23 are mounted adjacent to each other inside the hull 101, so that the first shaft section 12 of the drive shaft 2 extends from the inside of the first housing 13 into the second housing 23, where it is coupled to the second shaft section 22.

The first electric machine 10 and the second electric machine 20 are operated on different voltages, wherein the first electric machine 10 is operated in a high voltage range between 360 and 400 Volt and the second electric machine 20 is operated at a low voltage range at around 48 Volt.

The marine propulsion device 1 further comprises a control system 50, which is arranged to control the operation of the first electric machine 10 and the second electric machine 20. Some components of the control system 50 are enclosed in a first control box 51 and a second control box 52, which are mounted to the housings 13 and 23 of the first and second electric machines 10 and 20. Each of the two electric machines 10 and 20 has its dedicated inverter, which is an essential part of the corresponding first or second control box 51 and 52. The inverter for the first electric machine 10 in the first control box 51 is connected to a high voltage battery 54. The inverter for the second electric machine 20 in the second control box 52 is connected to a low voltage battery 55 and to a low voltage service battery 56. The connections of the second electric machine 20 with two batteries 55 and 56 provide for a high reliability of the marine propulsion system 1.

Other components of the control system 50 are located inside the first and second housings 13 and 23. The control system 50 further comprises communication connections 53 and interfaces to connect the components and to transmit all required signals and data. This way a solid and compact design of the marine propulsion device 1 is achieved. The control system 50 is connected to at least one input device or HMI at the helm of the marine vessel 100 to receive commands about the requested speed and/or heading. The control system 50 is arranged to control operation of the marine propulsion device 1 in three operation modes. A first operating mode uses only the first electric machine 10 for propulsion. A second operating mode uses only the second electric machine 20 for propulsion. A third operating mode uses the first and the second electric machines 10, 20 simultaneously for propulsion. The three operating modes allow for a very efficient overall efficiency of the marine propulsion device 1 in all speed ranges. The high-voltage and high powered first electric propulsion device 1 can be efficiently used during high-speed operations of the propeller 43. The low-voltage and low powered second electric propulsion device can be efficiently used during low-speed operations. Both electric propulsion machines can be used for reaching a maximum propulsion power, if requested.

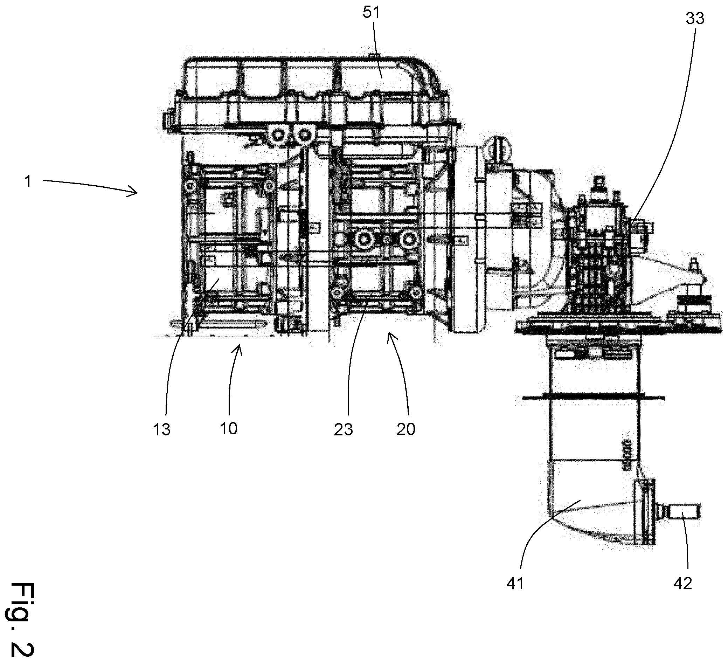

Fig. 2 shows a layout of a marine propulsion device 1 for a sail drive. The same components of the marine propulsion device 1 are indicated by the same referral numbers of Fig. 1.

### Referals

- 1: marine propulsion device
- 2: drive shaft
- 3: connection
- 4: torsional damper
- 10: first electric machine
- 11: first rotor
- 12: first shaft section
- 13: first housing

- 20: second electric machine
- 21: second rotor
- 22: second shaft section
- 23: second housing

- 30: upper bevel gear set
- 31: input shaft
- 32: vertical shaft
- 33: gearbox housing

- 40: lower bevel gear set
- 41: pod
- 42: propeller shaft
- 43: propeller

- 50: control system
- 51: first control box
- 52: second control box
- 53: communication connections
- 54: high voltage battery
- 55: low voltage battery
- 56: low voltage service battery

## Claims

1. Marine propulsion device (1) comprising a first electric machine (10) and a second electric machine (20), wherein both electric machines (10, 20) are coupled to a drive shaft (2) for driving a propeller (43), and wherein the first electric machine (10) and the second electric machine (20) are operated on different voltages.

2. Marine propulsion device (1) according to claim 1, wherein the first electric machine (10) is operated in a high voltage range and the second electric machine (20) is operated at a low voltage range.

3. Marine propulsion device (1) according to claim 2, wherein the first electric machine (10) is connected to a high voltage battery (54), wherein the second electric machine (20) is connected to a low voltage battery (55), and wherein the second electric machine (20) is also connected to a low voltage service battery (56).

4. Marine propulsion device (1) according to claim 1, 2 or 3, wherein the first electric machine (10) comprises a first rotor (11) and the second electric machine (20) comprises a second rotor (21), and wherein the drive shaft (2) is permanently connected to the first rotor (11) and to the second rotor (21).

5. Marine propulsion device (1) according to one of the preceding claims, wherein the drive shaft (2) is a multi-piece shaft comprising at least a first shaft section (12) and a second shaft section (22) coupled together for co-rotation.

6. Marine propulsion device (1) according to one of the preceding claims, wherein the marine propulsion device (1) comprises an upper bevel gear set (30) and a lower bevel gear set (40) to transmit propulsion power from the drive shaft (2) to a propeller shaft (42) supported in a pod (41) which is arranged underneath a hull (101) of a marine vessel (100).

7. Marine propulsion device (1) according to one of the preceding claims, wherein the marine propulsion device (1) comprises a control system (50), which is arranged to independently control the operation of the first electric machine (10) and the second electric machine (20).

8. Marine propulsion device (1) according to claim 7, wherein the control system (50) is arranged to control operation of the marine propulsion device (1) in three operation modes, a first operating mode using only the first electric machine (10) for propulsion, a second operating mode using only the second electric machine (20) for propulsion and a third operating mode using the first and the second electric machines (10, 20) for propulsion.

9. Marine vessel (100) with a marine propulsion device (1) according to one of the preceding claims.
